# EUROPÄISCHE PATENTSCHRIFT

(11) **EP 1 385 688 B1**
(45) Veröffentlichungstag und Bekanntmachung des Hinweises auf die Patenterteilung: **08.03.2006**
(21) Anmeldenummer: 01989424.5
(22) Anmeldetag: 21.12.2001
(51) Int. Cl.: B29C 45/66

(54) **SCHLIESSEINHEIT**
CLOSING UNIT
UNITE DE FERMETURE

(30) Priorität: 11.05.2001 DE 10122857
(43) Veröffentlichungstag der Anmeldung: 04.02.2004
(73) Patentinhaber: Bosch Rexroth AG, 97816 Lohr (DE)
(72) Erfinder: DANTLGRABER, Jörg, 97816 Lohr (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2001/004839
(87) Internationale Veröffentlichungsnummer: WO 2002/092320

(56) Entgegenhaltungen:
- DE-A- 19 925 325
- DE-B- 1 227 642
- US-A- 5 922 371

## Beschreibung

Die Erfindung betrifft eine Schliesseinheit für eine Spritzgiessmaschine gemäss dem Oberbegriff des Patentanspruchs 1.

Derartige Schliesseinheiten übernehmen die Schliess- und Öffnungsbewegung der Werkzeughälften. Darüber hinaus muss durch die Schliesseinheit sichergestellt werden, dass die für den Einspritzprozess erforderliche Zuhaltekraft hinreichend ist, um ein Auseinandertreiben der Werkzeughälften durch die mit hohem Druck einströmende plastifizierte Formmasse zu verhindern. Bei formflüssigen Systemen, bspw. Kniehebel- oder Spreizhebelsystemen erfolgt das Zusammenhalten der Werkzeughälften durch selbstsperrende mechanische Bauelemente. Bei kraftschlüssigen Systemen wird die Zuhaltekraft über hydraulische Arbeitszylinder oder ähnliches aufgebracht.

Im Zuge der fortschreitenden Automatisierung ist man in den letzten Jahren bestrebt, die hydraulischen Antriebe für Spritzgiessmaschinen durch elektrische Antriebe zu ersetzen, da deren Regelung einfacher beherrschbar ist. Der elektrische Antrieb muss derart ausgelegt sein, dass er zum einen das Werkzeug im Eilgang schnell schliessen kann und zum anderen während des Einspritzvorganges die erforderliche Schliesskraft zur Verfügung stellt. Aus www.battenfeld.corti ist eine elektrisch angetriebene Schliesseinheit bekannt, bei der die bewegliche Aufspannplatte mittels einer elektrisch angetriebenen Spindel verfahrbar ist. Diese bekannte Lösung wird jedoch nur bei sehr geringer Schliesskraft bis ca. 50 kN und einem Schussgewicht von maximal 1,1 cm³ eingesetzt.

Aus der US 5,922,371 ist eine Schließeinheit für eine Spritzgussmaschine bekannt, bei der eine Werkzeugspannplatte über eine Spindel verfahrbar ist. Die Werkzeugspannplatte stützt sich über eine Druckfeder an einer stirnseitigen Platte der Spindel ab, wobei bei Überschreitung einer bestimmten Schließkraft die Druckfeder gestaucht wird und die Spannplatte über Bremselemente am Rahmen festgesetzt wird. Bei entgegengesetzter Ansteuerung der Spindel wird die Druckfeder wieder entspannt und die Bremselement werden aus ihrem Eingriff mit dem Rahmen gebracht, so dass die Schließeinheit geöffnet werden kann.

Der Erfindung liegt die Aufgabe zugrunde, eine elektrisch betätigte Schliesseinheit zu schaffen, die auch bei hohen Schliesskräften einsetzbar ist.

Diese Aufgabe wird durch die Merkmale des Patentanspruchs 1 gelöst.

Erfindungsgemäss hat die Schliesseinheit eine Spindel, über die die bewegliche Werkzeugspannplatte zum Schliessen des Werkzeuges verfahrbar ist. Auf der Spindel ist eine mit der Werkzeugspannplatte in Wirkverbindung stehende Mutter geführt, an der mittelbar oder unmittelbar zumindest ein Kippelement abgestützt ist, das beim Schliessen der Form in eine Klemmlage bringbar ist, so dass die Werkzeugspannplatte durch die an der Spindel oder einem Rahmen der Schliesseinheit abgestützten Klemmelemente mit einer in Schliessrichtung wirkenden Kraft beaufschlagt ist, wobei die Schliesseinheit in der Klemmlage des Kippelementes zuverlässig kraftschlüssig verriegelt ist. Dabei wird es besonders bevorzugt, wenn eine Vielzahl von Kippelementen im Abstand zur Spindelachse angeordnet ist, so dass ein gleichmässiges Aufbringen der Schliesskraft gewährleistet ist.Durch das Klemmen der Kippelemente wird der Spindeltrieb entlastet, so daß einem vorzeitigen Verschleiß vorgebeugt wird.

Bei einer vorteilhaften Variante der Erfindung wird die Mutter zum Schliessen des Werkzeuges zunächst über die Spindel in Axialrichtung verschoben. Beim Zusammenfahren des Werkzeuges oder durch die Wirkung eines Elektromagneten wird die Mutter dann mittels einer Klemmmutter drehfest mit der Spindel verbunden und durch die daraus resultierende Verdrehung der Mutter, die Kippelemente in ihre Klemmposition gebracht.

Bei einem bevorzugten Ausführungsbeispiel der Erfindung sind die Kippelemente einerseits an der Werkzeugspannplatte und andererseits an einer Stirnfläche der benachbarten Mutter abgestützt.

Das Mitdrehen der Mutter lässt sich bei ausgerückten Kippelementen durch eine Verdrehsicherung verhindern, die jedoch in der Klemmlage der Kippelemente das vorbeschriebene Drehen der Mutter ermöglichen. Eine derartiger Verdrehsicherung kann beispielsweise durch vorgespannte Federn gebildet werden, wobei die Federvorspannung/Federrate derart gewählt ist, dass die Mutter im Eilgang (Zufahren des Werkzeuges) gegenüber der Spindel festgehalten wird, während die Kraft der Feder bei drehfest mit der Spindel verbundener Mutter durch das auf der Spindel aufgebrachte Drehmoment überwunden wird.

Die Klemmmutter zur drehfesten Verbindung der Mutter mit der Spindel kann einstückig mit der Mutter oder als gesondertes Bauteil ausgeführt werden.

Die Klemmmutter kann mittels einer auf der Spindel geführten Klemmhülse in ihre Klemmposition vorgespannt werden, wobei eine Relativverdrehung zwischen Klemmhülse und der die Werkzeugspannplatte beaufschlagenden Mutter ausgenutzt wird, um die Klemmmutter radial nach innen gegen die Spindel vorzuspannen.

Die Übertragung dieser Klemmkräfte kann durch Kippelemente erfolgen, die ähnlich wie die zur Verriegelung verwendeten Kippelemente ausgeführt sind und die einerseits an der Klemmhülse und andererseits an der Klemmmutter abgestützt sind und durch die Relativverdrehung in eine Strecklage gebracht werden, in der die Klemmhülse gegen die Spindel gespannt ist.

Bei dieser Lösung werden vorteilhafterweise zwei Verdrehsicherungen eingesetzt, wobei die eine Verdrehsicherung im Eilgang eine Verdrehung zwischen Werkzeugspannplatte und Mutter verhindert, während die zweite Verdrehsicherung im Eilgang die Relativposition zwischen Klemmhülse und Mutter aufrecht erhält - beide Verdrehsicherungen erlauben jedoch während der Verriegelung eine Relativverdrehung der genannten Bauelemente.

Zur Entlastung des Spindelantriebes wird die Spindel mit einem Axiallager ausgeführt, so dass die Klemmkräfte der Kippelemente über das Axiallager in den Rahmen der Schliesseinheit eingeleitet werden.

Bei einem weiteren Ausführungsbeispiel der Erfindung ist die Klemmhülse gemeinsam mit einer Klemmbuchse auf der von der Spindel angetriebenen Mutter geführt und gegen jeweils einen Anschlag vorgespannt. Die Werkzeugspannplatte ist über einen Kniehebel sowohl mit der Klemmhülse als auch mit der Mutter verbunden, so dass im Eilgang die Axialverschiebung der Mutter über die Klemmhülse und den Kniehebel auf die Werkzeugspannplatte übertragen wird. Beim Verriegeln, d.h. beim Aufbringen einer Schliesskraft wird der Kniehebel in seine Streckstellung gebracht und die Klemmhülse und die Klemmbuchse gegenüber der Mutter verschoben. Diese Relativverschiebung wird ausgenutzt, um mehrere an der Klemmhülse und der Klemmbuchse abgestützten Kippelemente in eine Klemmposition zu bringen, in der die Klemmhülse und die Klemmbuchse über die Kippelemente an einem Rahmen der Schliesseinheit abgestützt sind. Das heisst, bei verriegelter Schliesseinheit werden die Schliesskräfte über den Kniehebel, die Klemmhülse und die Klemmbuchse sowie die Kippelemente in den Rahmen eingeleitet, so dass der Spindelantrieb entlastet ist.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 an eine Schnittdarstellung eines ersten Ausführungsbeispiels einer Schliesseinheit mit einer getrennt von einer Mutter ausgeführten Klemmhülse;
Figur 2 ein weiteres Ausführungsbeispiel einer Schliesseinheit, bei der die Klemmhülse einstückig mit der Mutter ausgebildet ist;
Figur 3 eine Seitenansicht der Schliesseinheit aus Figur 1 und
Figur 4 einen Schnitt durch ein drittes Ausführungsbeispiel einer erfindungsgemässen Schliesseinheit mit Kniehebel.

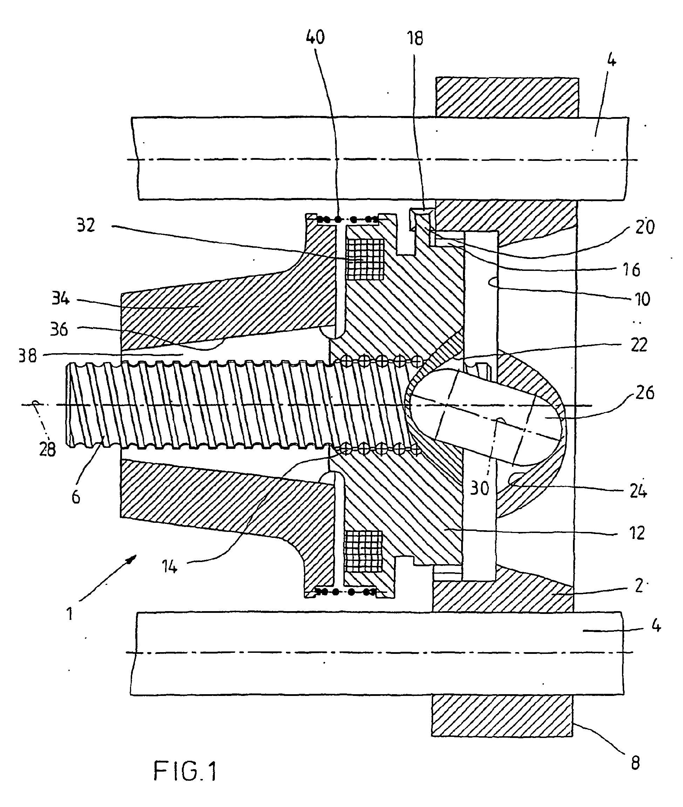

Figur 1 zeigt in stark vereinfachter Form eine Schnittdarstellung einer elektrisch betätigten Schliesseinheit 1 einer Spritzgiessmaschine. Diese hat eine (nicht dargestellte) feststehende Werkzeugspannplatte und eine bewegliche Werkzeugspannplatte 2, auf denen das Spritzgiesswerkzeug aufspannbar ist. Die bewegliche Werkzeugspannplatte 2 ist an vier Holmen 4 geführt, von denen in der Darstellung gemäss Figur 1 nur zwei sichtbar sind. Diese Holme 4 sind - ggf. mit Vorspannung - im Bett der Spritzgiessmaschine gelagert.

Die Schliessbewegung der beweglichen Werkzeugspannplatte 2 erfolgt mittels einer Spindel 6, die drehbar in der Schliesseinheit 1 gelagert ist und über einen nicht dargestellten Antrieb, beispielsweise einen Servomotor, wie er bei Werkzeugmaschinen verwendet wird, antreibbar ist. An der von einer Werkzeugaufspannfläche 8 entfernten Rückseite der Werkzeugspannplatte 2 ist eine Ausnehmung 10 ausgebildet, in die die Stirnfläche einer Mutter 12 eintaucht. Diese steht über ein Kugel- oder Rollengewinde 14 in Gewindeeingriff mit der Spindel 6.

Wie in Figur 1 angedeutet, ist die Mutter 12 radial in der Ausnehmung 10 geführt. Diese Radialführung kann beispielsweise durch ein Nadellager 16 erfolgen, das den Endabschnitt der Mutter 12 umgreift.

An der Werkzeugspannplatte 2 und am Aussenumfang der Mutter 12 sind desweiteren Drehanschläge 18 bzw. 20 befestigt, die über eine nicht dargestellte vorgespannte Feder auf Abstand gehalten werden. Die Vorspannung und Federrate der Feder ist so gewählt, dass im Eilgang, d.h. beim schnellen Verfahren der Werkzeugspannplatte 2 bis kurz vor dem Aufeinanderlaufen der beiden Werkzeughälften, die Mutter 12 nicht gegenüber der Werkzeugspannplatte 2 verdreht wird, so dass die Drehung der Spindel 6 in eine Axialverschiebung der Mutter 12 umgesetzt wird.

In dem in die Ausnehmung 10 eintauchenden Endabschnitt der Mutter 12 und in der benachbarten Grundfläche der Ausnehmung 10 ist jeweils eine taschenförmige Ausnehmung 22, 24 angeordnet, in denen jeweils ein Endabschnitt eines Kippelementes 26 gelagert ist. Die Achse 30 dieses Kippelementes 26 verläuft in der dargestellten Position schräg zur Spindelachse 28. Die Taschen 22, 24 und die entsprechenden Endabschnitte des Kippelementes 26 sind ballig ausgeführt, so dass das Kippelement 26 aus der dargestellten Schräganstellung in eine Klemmposition gebracht wird, in der der Winkel zwischen der Spindelachse 28 und der Achse 30 des Kippelementes verkleinert wird.

Bei dem in Figur 1 dargestellten Ausführungsbeispiel sind mehrere Kippelemente 26 im Aussenumfangsbereich der Mutter 12 gelagert, d.h. das in Figur 1 dargestellte Kippelement 26 befindet sich im Radialabstand zu der Spindel 6.

An der von der taschenförmigen Ausnehmung 22 entfernten Stirnfläche der Mutter 12 ist ein etwa ringförmiger Elektromagnet 30 angeordnet, der über die Maschinensteuerung bestrombar ist. Durch Bestromen dieses Elektromagneten 30 lässt sich eine Klemmhülse 34 aus der in der Figur 1 dargestellten beabstandeten Position in eine Anlageposition an die Mutter 12 bringen.

Die Klemmhülse 34 hat einen Innenkegel 36, der eine entsprechend ausgeformte Umfangsfläche einer Klemmmutter 38 umgreift. Durch die Axialverschiebung der Klemmhülse 34 wird die Klemmmutter 38 in eine Eingriffsposition mit der Spindel 6 gebracht, so dass die Mutter 12 über die Klemmmutter 38 und die Klemmhülse 34 drehfest mit der Spindel 6 verbunden ist. Die Klemmmutter 38 kann einstückig mit der Mutter 12 oder als gesondertes Bauteil ausgeführt sein.

Wie in Figur 1 angedeutet, wird bei unbestromtem Elektromagnet 32 die Mutter 12 über eine Feder 40 beabstandet.

Um die bewegliche Werkzeugspannplatte 2 im Eilgang, d.h. mit grosser Fahrgeschwindigkeit, bis kurz vor die Schliessposition des Werkzeuges zu fahren, wird der Antrieb der Spindel 6 angesteuert. Die Klemmmutter 38 befindet sich ausser Eingriff, so dass die Mutter 12 nicht mit der Spindel 6 mitdreht und in Schliessrichtung verschoben wird. Diese Schliessbewegung wird über die Kippelemente 26 auf die Werkzeugspannplatte 2 übertragen.

Nach dem Schliessen des Werkzeuges wird der Elektromagnet 32 bestromt, so dass die Klemmhülse 34 gegen die Kraft der Druckfeder 40 nach rechts (Figur 1) bewegt und die Klemmmutter 38 in ihre Eingriffsposition gebracht wird, in der die Mutter 12 drehfest mit der Spindel 6 verbunden ist. Das von dieser aufgebrachte Drehmoment und die daraus resultierende Axialkraft wird dann direkt auf die Mutter 12 übertragen. Die Mutter 12 dreht in der Folge mit der Spindel 6 mit, so dass die Kippelemente 26 in Richtung der Spindelachse 28 gekippt und somit die Werkzeugspannplatte 2 durch die von den Kippelementen 26 aufgebrachte Klemmkraft kraftschlüssig verriegelt ist. Diese Verriegelungskraft wird über die Kippelemente 26 und die Mutter in die Spindel 6 eingeleitet. Diese kann zur besseren Axialabstützung mit einem Axiallager abgestützt werden.

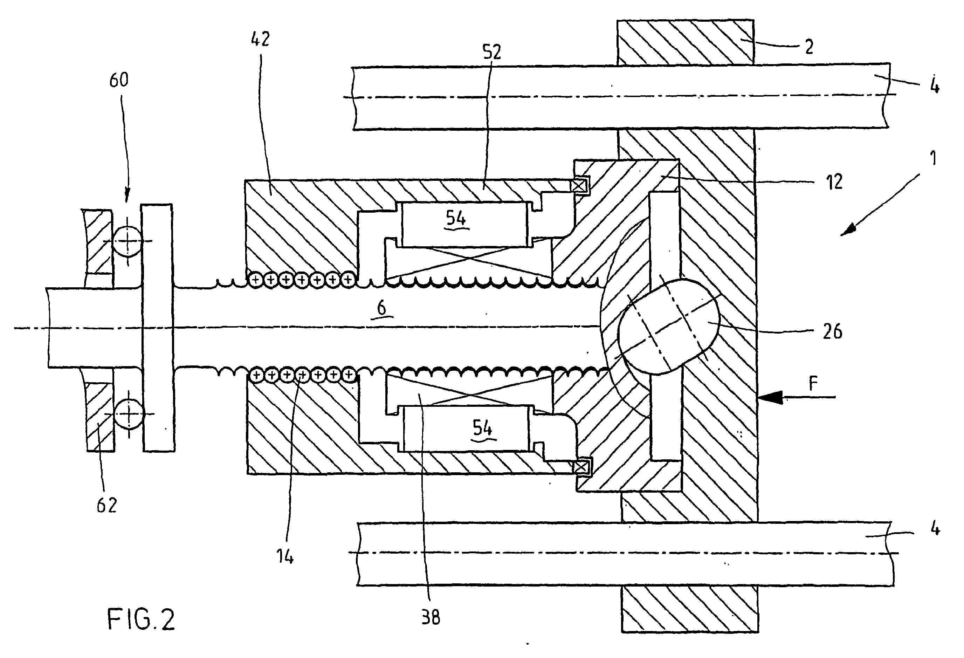

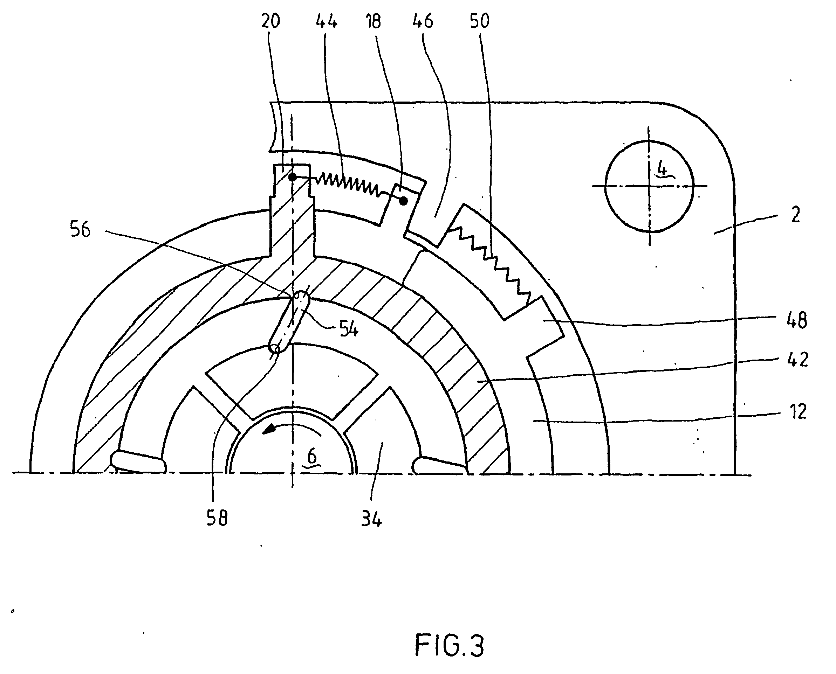

In den Figuren 2 und 3 ist ein weiteres Ausführungsbeispiel einer erfindungsgemässen Schliesseinheit 1 dargestellt, bei dem die Verriegelung mechanisch und nicht wie beim vorbeschriebenen Ausführungsbeispiel, durch einen Elektromagneten 32 erfolgt.

Die Führung der beweglichen Werkzeugspannplatte 2 auf den Räumen 4, der Grundaufbau der Mutter 12 (abgesehen davon, daß diese nicht alss Kugelrollbuchse ausgebildet ist) und der Kippelemente 26 entspricht demjenigen des vorbeschriebenen Ausführungsbeispiels, so dass weitere diesbezügliche Erläuterungen entbehrlich sind.

Die Mutter 12 ist - ähnlich wie beim vorbeschriebenen Beispiel - mit einer Klemmmutter 38 versehen, die radial nach innen verformbar ist, um einen drehfesten Eingriff mit der Spindel 6 herbeizuführen. Die Beaufschlagung der Klemmmutter 38 erfolgt über eine Klemmhülse 42, die mittels eines Kugel- oder Rollengewindes mit der Spindel 6 in Eingriff steht.

Bei dem in Figur 2 dargestellten Ausführungsbeispiel ist zwischen der Mutter 12 und der Klemmhülse 42 sowie zwischen der Werkzeugspannplatte 2 und der Mutter 12 jeweils eine Verdrehsicherung vorgesehen, die verhindert, dass die Klemmmutter 42 und die Mutter 12 im Eilgang mit der Spindel 6 mitdrehen. Figur 3 zeigt eine Möglichkeit, eine derartige Verdrehsicherung auszuführen.

Ähnlich wie bei dem vorbeschriebenen Ausführungsbeispiel sind bei der in Figur 3 dargestellten Variante die Mutter 12 und die Klemmhülse 42 mit jeweils einem Drehanschlag 18 bzw. 20 versehen, die durch eine vorgespannte Feder 44 auf Abstand gehalten werden. Der Drehanschlag 18 liegt an einem Anschlag 46 der beweglichen Werkzeugspannplatte 2 an. Die Kraft der Feder (44) ist so ausgelegt, dass die von der Spindel 6 auf die Klemmmutter 14 übertragenen Reib- und Beschleunigungskräfte überwunden werden können. Das heisst, die Klemmmutter 14 kann erst dann relativ zur Mutter 12 verdreht werden, wenn die über die Spindel 6 eingeleiteten Reib- und Beschleunigungskräfte grösser als die von der Feder 44 aufgebrachte Kraft ist.

Gemäss Figur 3 hat die Mutter 12 einen im Abstand zum Drehanschlag 18 ausgeführten Radialvorsprung 48, der über eine Druckfeder 50 im Abstand zum Anschlag 46 gehalten wird. Demzufolge wirkt die Druckfeder 50 als Drehanschlag, der ein Verdrehen der Mutter 12 gegenüber der Werkzeugspannplatte 2 verhindert, solange die Kraft der Feder 50 nicht durch die über die Spindel eingeleiteten Kräfte überwunden wird.

Gemäss der Darstellung in Figur 2 hat die Klemmhülse 42 einen etwa tassenförmigen Aufbau, wobei der Ringmantel 52 die Klemmmutter 38 im Abstand umgreift. Im dem Ringspalt zwischen dem Ringmantel 52 und dem Aussenumfang der Klemmmutter 38 sind mehrere, am Umfang verteilte Klemmkörper 54 angeordnet. Gemäss der Seitenansicht in Figur 3 ist die Achse der Klemmkörper 54 schräg zur Radialrichtung der Klemmmutter 42 angestellt. Die Klemmkörper 54 sind einerseits in einer Aufnahme 56 der Klemmmutter 42 und andererseits in einer Aufnahme 58 der Kreissegmente der Klemmmutter 38 gelagert. Die Wirkung dieser Klemmkörper 54 ist die gleiche wie diejenige der Kippelemente 26, d.h. die Klemmkörper 54 werden durch eine Verdrehung der Klemmhülse 42 mit Bezug zur Klemmmutter 38 in Radalrichtung gekippt, so dass die Spreizsegmente der Klemmmutter 38 radial nach innen vorgespannt und somit ein drehfester Eingriff mit der Spindel 6 hergestellt wird.

Wie desweiteren aus Figur 2 entnehmbar ist, hat die Spindel 6 eine Axiallagerung 60, über die die Axialkräfte beim Verriegeln in das Gestell 62 der Spritzgiessmaschine eingeleitet werden.

Bei dieser Variante wird die Drehbewegung der Spindel 6 über das Kugelgewinde 14 auf die Klemmhülse 42 übertragen. Während des Eilganges wirkt die Feder 44 als Drehanschlag, so dass die Klemmhülse 42 nicht mitdreht. Entsprechend wird auch die Mutter 12 mit der Klemmmutter 38 in Axialrichtung verschoben, wobei eine Verdrehung durch die Druckfeder 50 verhindert ist. Beim Schliessen des Werkzeuges wirkt eine Kraft F auf die Werkzeugspannplatte 2, die der Axialverschiebung der Klemmhülse 42 entgegenwirkt. Durch diese Gegenkraft wird die von der Feder 44 aufgebrachte Spannkraft überwunden, so dass die Klemmhülse 42 gegenüber der Mutter 12 verdreht wird, die durch die Druckfeder 50 in ihrer Drehposition gehalten wird.

Durch die Relativverdrehung zwischen Klemmhülse 42 und Mutter 12 werden die Klemmkörper 54 in der vorgeschriebenen Weise verschwenkt, so dass die Klemmmutter 38 eingreift und die Mutter 12 drehfest mit der Spindel 6 verbindet.

Durch diese drehfeste Verbindung der Mutter 12 mit der Spindel 6 wird die Kraft der Druckfeder 50 überwunden, so dass auch die Mutter 12 mit der Spindel 6 mitdreht. Diese Relativdrehung zwischen Mutter 12 und Werkzeugspannplatte 2 führt - wie beim eingangs beschriebenen Ausführungsbeispiel - dazu, dass die Kippelemente 26 in ihre Klemmlage gebracht werden - das Werkzeug ist verriegelt, wobei die Klemmkräfte über die Werkzeugspannplatte 2, die verschwenkten Klemmelemente 26, die Spindel 6 und das Axiallager 60 in das Gestell der Spritzgiessmaschine eingeleitet werden.

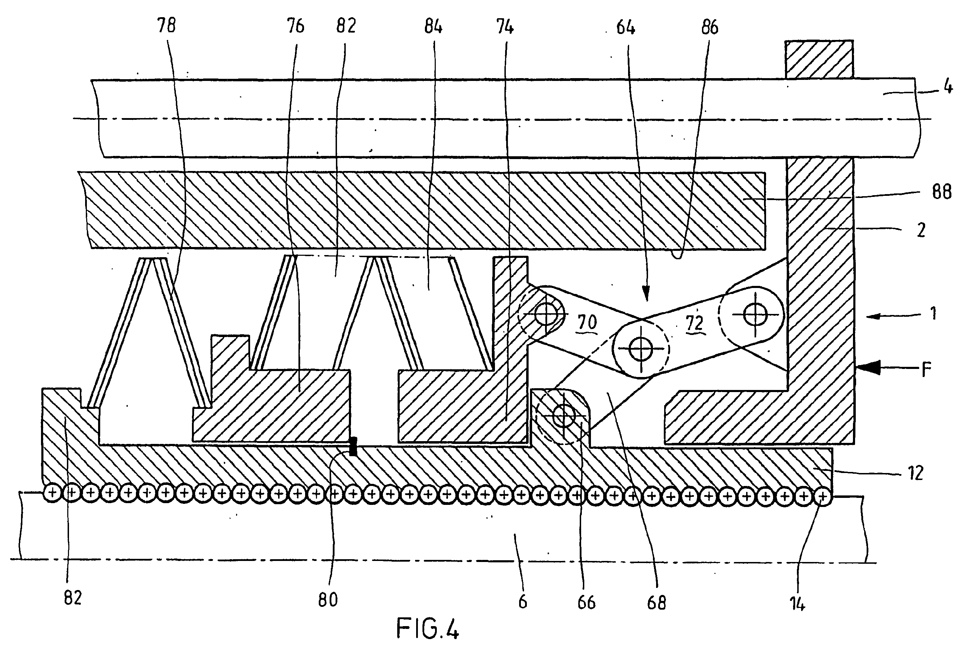

In Figur 4 ist ein weiteres Ausführungsbeispiel dargestellt, bei dem anstelle der Kippelemente 26 ein Kniehebel 64 zur Verriegelung verwendet wird.

Auch bei dem in Figur 4 dargestellten Ausführungsbeispiel ist die bewegliche Werkzeugspannplatte 2 auf Holmen 4 geführt und kann in Schliess- und Öffnungsrichtung über die Spindel 6 verschoben werden. Diese steht über das Kugelgewinde 14 in Eingriff mit einer Mutter 12, die bei Ansteuerlmg der Spindel 6 in Axialrichtung verschiebbar ist.

Am Aussenumfang der Spindel 12 ist eine Anlenkung 66 ausgebildet, an der eine Kniehebelschwinge 68 des Kniehebels 64 angelenkt ist. Die beiden Hebel 70, 72 des Kniehebels 64 sind an einer auf der Mutter 12 axial verschiebbar geführten Klemmhülse 74 bzw. der Werkzeugspannplatte 2 angelenkt.

Im Abstand zur Klemmhülse 74 ist desweiteren eine Klemmbuchse 76 am Aussenumfang der Mutter 12 geführt, die mittels einer Vorspannfeder 78 gegen einen Axialanschlag 80 vorgespannt ist. Die Vorspannfeder 78 ist an einem Ringbund 81 der Mutter 12 abgestützt.

Gemäss Figur 4 sind am Aussenumfang der Klemmbuchse 76 und der Klemmhülse 74 mehrere Klemmelemente 82 bzw. 84 abgestützt, die sich vom Aussenumfang der Klemmhülse, - buchse 74, 76 schräg zur Radialrichtung angestellt, hin zu einer Umfangswandung 86 eines am Bett der Spritzgiessmaschine abgestützten Rahmenteils 88 erstrecken. Dieses Rahmenteil 88 kann beispielsweise die vorgeschriebenen Bauelemente der Schliesseinheit 1 zylindermantelförmig umgreifen.

Gemäss Figur 4 sind die Klemmelemente 82, 84 jeweils als Paket von Einzelelementen ausgeführt, wobei die Klemmelemente 84 zum Rahmenteil 88 hin nach links geneigt sind, während die Klemmelemente 82 in der Gegenrichtung angestellt sind.

Bei der Ansteuerung der Spindel 6 wird die Mutter 12 zum Schliessen des Werkzeuges nach rechts verschoben. Diese Axialverschiebung wird über die Vorspannfeder 78, die Klemmbuchse 76, die Klemmelemente 82, 84, die Klemmhülse 74 und den Kniehebel 64 auf die bewegliche Werkzeugspannplatte 2 übertragen, so dass diese in Schliessrichtung bewegt wird. Beim Schliessen des Werkzeuges wirkt die Kraft F auf die Werkzeugspannplatte 2, so dass diese abgebremst und die Kniehebelschwinge 68 in der Darstellung gemäss Figur 4 nach links verschwenkt wird. Der Kniehebel 64 wird dabei in Richtung seiner Streckstellung bewegt und die Klemmhülse 74 nach links bewegt, so dass sie von der als Anschlag wirkenden Anlenkung 66 abhebt.

Gleichzeitig wird die Klemmbuchse 76 durch die Kraft der Vorspannfeder 78 gegen den Axialanschlag 80 vorgespannt - das heisst, die Klemmhülse 74 und die Klemmbuchse 76 bewegen sich aufeinander zu. Durch diese Relativbewegung der Klemmhülse 74 bzw. der Klemmbuchse 76 mit bezug zum Rahmenteil 88 werden die Klemmelemente 82, 84 aus ihrer Schräglage in Radialrichtung gekippt, so dass ein Kraftschluss zwischen dem Kniehebel 64 und dem Rahmen 88 entsteht und die auf die Spindel 6 wirkenden Axialkräfte verringert werden.

Bei der weiteren Bewegung der Mutter 12 bewegt sich der Axialanschlag 80 von der geklemmten Klemmbuchse 76 weg und die Kniehebelschwinge 68 wird gemäss Figur 4 weiter nach links verschwenkt und der Kniehebel 64 zum Verriegeln der Schliesseinheit in seine Streckstellung gebracht. In dieser Streckstellung wird die auf die Werkzeugspannplatte 2 wirkende Schliesskraft über den Kniehebel 64, die Klemmhülse 74, die Klemmbuchse 76, die Klemmelemente 82, 84 in das Rahmenteil 88 eingeleitet, so dass der Kugelgewindetrieb zwischen Spindel 6 und Mutter 12 entlastet wird.

Ein gemeinsames Merkmal aller vorbeschriebenen Ausführungsbeispiele ist, dass eine Dreh- oder Axialbewegung der Mutter 12 ausgenutzt wird, um Klemmelemente in ihre Klemmposition zu bringen, über die eine kraftschlüssige Verbindung mit der Spindel oder einem Rahmenteil hergestellt wird, um somit die auf den Spindeltrieb wirkenden Kräfte zu verringern und eine zuverlässige Verriegelung zu gewährleisten.

Offenbart ist eine Schliesseinheit für eine elektrisch betätigbare Spritzgiessmaschine mit einer antreibbaren Spindel, über die eine Werkzeugspannplatte in Schliessrichtung bewegbar ist. Auf der Spindel ist eine Mutter geführt, deren Axialbewegung auf eine Werkzeugspannplatte übertragbar ist. Die Axial- oder Drehbewegung der Mutter wirkt auf Kippelemente, die in eine Klemmlage bringbar sind, in der die auf die Werkzeugspannplatte wirkenden Schliesskräfte zur Entlastung des Spindeltriebs über die Kippelemente direkt in die Spindel oder in einen Rahmen der Spritzgiessmaschine einleitbar sind.

### Bezugszeichenliste:

- 1: Schliesseinheit
- 2: bewegl. Werkzeugspannplatte
- 4: Hahn
- 6: Spindel
- 8: Aufspannfläche
- 10: Ausnehmung
- 12: Mutter
- 14: Kugelgewinde
- 16: Nadellager
- 18: Drehanschlag
- 20: Drehanschlag
- 22: Taschenförmige Ausnehmung
- 24: Taschenförmige Ausnehmung
- 26: Kippelement
- 28: Spindelachse
- 30: Achse
- 32: Elektromagnet
- 34: Klemmhülse
- 36: Innenkegel
- 38: Klemmmutter
- 40: Feder
- 42: Klemmhülse
- 44: Feder
- 46: Anschlag
- 48: Radialvorsprung
- 50: Druckfeder
- 52: Ringmantel
- 54: Klemmkörper
- 56: Aufnahme
- 58: Aufnahme
- 60: Axiallager
- 62: Gestell
- 64: Kniehebel
- 66: Anlenkung
- 68: Kniehebelschwinge
- 70: Hebel
- 72: Hebel
- 74: Klemmhülse
- 76: Klemmbuchse
- 78: Vorspannfeder
- 80: Axialanschlag
- 81: Ringbund
- 82: Kipp- bzw.
Klemmelemente
- 84: Kipp- bzw.
Klemmelemente
- 86: Umfangswandung
- 88: Rahmenteil

## Patentansprüche

1. Schliesseinheit für eine Spritzgiessmaschine, mit einer beweglichen Werkzeugspannplatte (2), die mittels einer Spindel (6) zum Schliessen eines Werkzeuges verfahrbar ist, und mit einer Zuhalteeinrichtung, über die das Werkzeug in seiner Schliessstellung gehalten wird, **dadurch gekennzeichnet, dass** die Zuhalteeinrichtung eine mit der Spindel (6) kämmende Mutter (12) hat, an der mittelbar oder unmittelbar zumindest ein Kippelement (26; 82, 84) abgestützt ist, das durch eine Schliessbewegung der Mutter (12) in eine Klemmlage bringbar ist, in der die Werkzeugspannplatte (2) über das Kippelement (26; 82, 84) an der Spindel (6) oder an einem Rahmen der Schliesseinheit (1) abgestützt ist.

2. Schliesseinheit nach Patentanspruch 1, wobei mehrere Kippelemente (26; 82, 84) im Abstand zur Spindelachse angeordnet sind.

3. Schliesseinheit nach Patentanspruch 1 oder 2, wobei die Mutter (12) mittels einer Klemmmutter (38) drehfest mit der Spindel(6) verbindbar ist, wobei die Kippelemente (26) einerseits an der Mutter (12) und andererseits an der Werkzeugspannplatte (2) abgestützt sind.

4. Schliesseinheit nach Patentanspruch 2, wobei die Klemmmutter (38) mittels eines Elektromagneten (32) in ihre Klemmposition bringbar ist.

5. Schliesseinheit nach Patentanspruch 3 oder 4, mit einer Verdrehsicherung (18, 20; 46, 48; 44, 50), über die ein Verdrehen der Mutter (12) bei ausgerückter Klemmmutter (38) verhindert ist.

6. Schliesseinheit nach Patentanspruch 3 und 5, wobei die Klemmmutter (38) einstückig mit der Mutter (12) ausgeführt ist und mittels einer mit der Spindel (6) in Eingriff stehenden Klemmhülse (42) in ihre Klemmposition bringbar ist, in der die Verdrehsicherung (18, 20, 44) eine Relativverdrehung zwischen Mutter (12) und Klemmhülse (38, 42) zulässt.

7. Schliesseinheit nach Patentanspruch 6, wobei zwischen Klemmhülse (42) und Mutter (12) Klemmkörper (54) angeordnet sind, die durch Relativverdrehung zwischen Mutter (12) und Klemmhülse (42) in eine die Klemmmutter (38) in Klemmrichtung beaufschlagende Klemmposition bringbar sind.

8. Schliesseinheit nach Patentanspruch 4, 5, oder 6, wobei jeweils eine Verdrehsicherung zwischen Werkzeugspannplatte (2) und Mutter (12) sowie zwischen Mutter (12) und Klemmhülse (42) vorgesehen ist.

9. Schliesseinheit nach einem der vorhergehenden Patentansprüche, wobei die Spindel (6) in Axialrichtung mittels eines Axiallagers (60) abgestützt ist.

10. Schliesseinheit nach Patentanspruch 1, wobei auf der Mutter (12) eine Klemmhülse (74) und eine dazu beabstandete Klemmbuchse (76) geführt sind, wobei die Klemmhülse (74) und die Mutter (12) über einen Kniehebel (64) mit der Werkzeugspannplatte (2) verbunden sind, und die Kippelemente (82, 84) sich zwischen Klemmbuchse (76) bzw. Klemmhülse (74) und einem Rahmenteil (88) der Schliesseinheit (1) erstrecken.

11. Schliesseinheit nach Patentanspruch 10, wobei die Klemmhülse (74) und die Klemmbuchse (76) jeweils gegen einen mutterseitigen Anschlag (66, 80) vorgespannt sind, so dass die Vorschubbewegung der Mutter (12) auf die Klemmhülse (74) und die Klemmbuchse (76) übertragbar ist und diese in der Strecklage des Kniehebels (64) von den Anschlägen (66, 80) abheben und durch die Verschiebung mit Bezug zum Rahmenteil (88) die Kippelemente (82, 84) in ihre Klemmlage bringbar sind, in der die Werkzeugspannplatte (2) über den Kniehebel (64), die Klemmhülse (74), die Klemmbuchse (76) und die Kippelemente (82, 84) am Rahmenteil (88) abgestützt ist.

## Claims

1. Clamping unit for an injection molding machine, comprising a movable mold backing plate (2) capable of being displaced with the aid of a spindle (6) for closing a mold, and comprising locking means whereby said mold is held in its closed position, **characterized in that** said locking means include a nut (12) which meshes with said spindle (6) and on which at least one tilting member (26; 82, 84) is supported directly or indirectly, which tilting member is capable of being taken, through a closing movement of said nut (12), into a clamping position wherein said mold backing plate (2) is supported on said spindle (6) or on a frame of said clamping unit (1) through the intermediary of said tilting member (26; 82, 84).

2. Clamping unit according to claim 1, wherein a plurality of tilting members (26; 82, 84) are arranged at a distance from the axis of said spindle.

3. Clamping unit according to claim 1 or 2, wherein said nut (12) is capable of being immobilized against rotation relative to said spindle (6) by means of a clamping nut (38), wherein said tilting members (26) are supported on said nut (12) on the one hand, and on said mold backing plate (2) on the other hand.

4. Clamping unit according to claim 2, wherein said clamping nut (38) is capable of being taken into its clamping position with the aid of an electromagnet (32).

5. Clamping unit according to claim 3 or 4, comprising rotation preventing means (18, 20; 46, 48; 44, 50) whereby a rotation of said nut (12) is prevented in the disengaged condition of said clamping nut (38).

6. Clamping unit according to claim 3 and 5, wherein said clamping nut (38) is designed integral with said nut (12) and with the aid of a clamping sleeve (42) engaged with said spindle (6) is capable of being taken into its clamping position wherein said rotation preventing means (18, 20, 44) permit a relative rotation between nut (12) and clamping sleeve (38, 42).

7. Clamping unit according to claim 6, wherein clamping members (54) are arranged between clamping sleeve (42) and nut (12), which clamping members are capable of being taken into a clamping position acting on said clamping nut (38) in the clamping direction through relative rotation between nut (12) and clamping sleeve (42).

8. Clamping unit according to claim 4, 5, or 6, wherein on respective rotation preventing means is provided between mold backing plate (2) and nut (12) and between nut (12) and clamping sleeve (42).

9. Clamping unit according to any one of the preceding claims, wherein said spindle (6) is supported in the axial direction with the aid of an axial bearing (60) .

10. Clamping unit according to claim 1, wherein a clamping sleeve (74) and a clamping bush (76) spaced apart therefrom are guided on said nut (12), said clamping sleeve (74) and said nut (12) being connected with said mold backing plate (2) through the intermediary of a toggle lever (64), and said tilting members (82, 84) extending between clamping bush (76) or clamping sleeve (74), respectively, and a frame member (88) of said clamping unit (1), respectively.

11. Clamping unit according to claim 10, wherein said clamping sleeve (74) and said clamping bush (76) are each biased against a nut-side stop (66, 80) whereby the advancing movement of said nut (12) is transmittable to said clamping sleeve (74) and said clamping bush (76), and the latter are in the extended position of said toggle lever (64) raised from said stops (66, 80) and, owing to the displacement relative to said frame member (88), said tilting members (82, 84) are capable of being taken into their clamping positions wherein said mold backing plate (2) is supported on said frame member (88) through the intermediary of said toggle lever (64), said clamping sleeve (74), said clamping bush (76) and said tilting members (82, 84).

## Revendications

1. Unité de fermeture pour une machine de moulage par injection, comportant une plaque mobile (2) de serrage d'outil, qui est déplaçable à l'aide d'une broche (6) pour fermer un outil, et un dispositif de retenue, au moyen duquel l'outil est retenu dans sa position fermée, **caractérisée en ce que** le dispositif de retenue possède un écrou (12), qui engrène avec la broche (6) et dans lequel prend appui directement ou indirectement au moins un élément basculant (26; 82, 84), qui, sous l'effet d'un déplacement de fermeture de l'écrou (12), peut être amené dans une position de blocage, dans laquelle la plaque (2) de serrage de l'outil prend appui par l'intermédiaire de l'élément basculant (26; 82, 89) sur la broche (6) ou sur un cadre de l'unité de fermeture (1).

2. Unité de fermeture selon la revendication 1, dans laquelle plusieurs éléments de basculement (26; 82, 84) sont disposés à distance de l'axe de la broche.

3. Unité de fermeture selon la revendication 1 ou 2, dans laquelle l'écrou (12) peut être relié solidairement en rotation à la broche (6) au moyen d'un écrou de blocage (38), les éléments basculants (26) prenant appui d'une part sur l'écrou (12) et d'autre part sur la plaque (2) de serrage de l'outil.

4. Unité de fermeture selon la revendication 2, dans laquelle l'écrou de blocage (38) peut être amené dans sa position de blocage à l'aide d'un électroaimant (32).

5. Unité de fermeture selon la revendication 3 ou 4, comportant un système (18, 20; 46, 48; 44, 50) empêchant une rotation, au moyen duquel une rotation de l'écrou (12) est empêchée lorsque l'écrou de blocage (38) est desserré.

6. Unité de fermeture selon les revendications 3 et 5, dans laquelle l'écrou de blocage (38) est réalisé d'un seul tenant avec l'écrou (12) et qui, au moyen d'une douille de blocage (42) en prise avec la broche (6), peut être amené dans sa position de blocage, dans laquelle le dispositif (19, 20, 44) empêchant une rotation autorise une rotation relative entre l'écrou (12) et la douille de blocage (38, 42).

7. Unité de fermeture selon la revendication 6, dans laquelle entre la douille de blocage (44) et l'écrou (12) sont disposés les corps de blocage (54), qui, sous l'effet d'une rotation relative entre l'écrou (12) et la douille de blocage (42), peuvent être amenés dans une position de blocage, qui charge l'écrou de blocage (38) dans le sens du blocage.

8. Unité de fermeture selon la revendication 4, 5 ou 6, dans laquelle il est prévu respectivement un système empêchant une rotation entre la plaque (2) de serrage de l'outil et l'écrou (12) ainsi qu'entre l'écrou (12) et la douille de blocage (42).

9. Unité de fermeture selon l'une des revendications précédentes, dans laquelle la broche (6) est supportée dans la direction axiale au moyen d'un palier axial (60).

10. Unité de fermeture selon la revendication 1, dans laquelle une douille de blocage (74) et un manchon de blocage (76) distants de la douille sont guidés sur l'écrou (12), la douille de blocage (74) et l'écrou (12) étant reliés au moyen d'un levier à genouillère (64) à la plaque (2) de serrage de l'outil, et les éléments basculants (82, 84) s'étendent entre le manchon de blocage (76) ou la douille de blocage (74) et une partie (88) du cadre de l'unité de fermeture.

11. Unité de fermeture selon la revendication 10, dans lequel la douille de blocage (74) et le manchon de blocage (76) sont précontraints respectivement contre une butée (66, 80) située côté écrou de sorte que le déplacement d'avance de l'écrou (12) peut être transmis à la douille de blocage (74) et au manchon de blocage (76) et que ces dernières s'écartent des butées (66, 80), lorsque le levier à genouillère (64) est dans la position déployée, et que, sous l'effet du déplacement par rapport à la partie (88) du cadre, les éléments basculants (82, 84) peuvent être amenés dans leur position bloquée, dans laquelle la plaque (2) de serrage de l'outil est supportée sur la partie (88) du cadre par l'intermédiaire du levier à genouillère (64), de la douille de blocage (74), du manchon de blocage (76) et des éléments basculants (82, 84).
